(19) Europäisches Patentamt
European Patent Office
Office européen des brevets

(11) **EP 4 415 225 A1**

(12) **EUROPEAN PATENT APPLICATION**
published in accordance with Art. 153(4) EPC

(43) Date of publication:
**14.08.2024 Bulletin 2024/33**

(21) Application number: **22878603.4**

(22) Date of filing: **06.10.2022**

(51) International Patent Classification (IPC):
*H02K 1/16* (2006.01)     *B22F 1/00* (2022.01)
*B22F 1/14* (2022.01)     *B22F 3/00* (2021.01)
*B22F 3/035* (2006.01)     *C22C 38/00* (2006.01)
*H01F 1/147* (2006.01)     *H01F 1/24* (2006.01)
*H01F 1/26* (2006.01)     *H01F 41/02* (2006.01)
*H02K 1/02* (2006.01)     *H02K 3/493* (2006.01)
*H02K 15/02* (2006.01)

(52) Cooperative Patent Classification (CPC):
**B22F 1/00; B22F 1/14; B22F 3/00; B22F 3/03;
C22C 38/00; H01F 1/147; H01F 1/24; H01F 1/26;
H01F 41/02; H02K 1/02; H02K 1/16; H02K 3/493;
H02K 15/02**

(86) International application number:
**PCT/JP2022/037524**

(87) International publication number:
**WO 2023/058736 (13.04.2023 Gazette 2023/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.10.2021   JP 2021165974
09.03.2022   JP 2022036710
23.06.2022   JP 2022101297**

(71) Applicant: **Proterial, Ltd.
Tokyo 135-0061 (JP)**

(72) Inventors:
• **NOGUCHI, Shin**
**Tokyo 135-0061 (JP)**
• **NISHIMURA, Kazunori**
**Tokyo 135-0061 (JP)**
• **KIKUCHI, Keiko**
**Tokyo 135-0061 (JP)**

(74) Representative: **Becker, Eberhard
Becker Kurig & Partner
Patentanwälte mbB
Bavariastraße 7
80336 München (DE)**

(54) **MAGNETIC WEDGE, DYNAMO-ELECTRIC MACHINE, AND METHOD FOR MANUFACTURING MAGNETIC WEDGE**

(57)     Provided are a magnetic wedge in which insertion of a magnetic wedge in a tooth tip of a dynamo-electric machine can be performed more smoothly, and a method for manufacturing the magnetic wedge. This magnetic wedge is installed in a slot opening of a stator of the dynamo-electric machine, and assuming that the dimension of the magnetic wedge in the circumferential direction of the dynamo-electric machine is the width, the projection shape of the magnetic wedge projected on a plane perpendicular to the width direction is a rectangle, parallelogram, or a right angle trapezoid, and the corners of the rectangle, parallelogram, or right angle trapezoid have a rounded shape.

FIG. 3

EP 4 415 225 A1

**Description**

[Technical Field]

The present invention relates to a magnetic wedge used in a magnetic circuit of a dynamo-electric machine, a dynamo-electric machine, and a method for manufacturing the magnetic wedge.

[Background Art]

In a general radial gap type dynamo-electric machine, a stator and a rotor are disposed coaxially, and a plurality of teeth with coils wound therearound is disposed at equal intervals in a circumferential direction on the stator around the rotor. Further, a magnetic wedge may be disposed at tips of the teeth on the rotor side to connect the tips of the adjacent teeth to each other. In this case, the magnetic wedge is used without winding the coil around the magnetic wedge itself, unlike a coil part and the like.

A magnetic flux reaching the coil from the rotor can be magnetically shielded by disposing such a magnetic wedge, and eddy current loss of the coil can be curbed. Further, by disposing the magnetic wedge, a magnetic flux distribution (particularly, a magnetic flux distribution in the circumferential direction) in a gap between the stator and the rotor can be smoothed, and rotation of the rotor can be smoothed. It is possible to obtain a high-efficiency and high-performance dynamo-electric machine by disposing the magnetic wedge in this way (for example, Patent Literature 1).

Further, as a conventional magnetic wedge, a composite material made of a ferromagnetic powder such as iron powder and a thermosetting resin is known. In a manufacturing method for the magnetic wedge, ferromagnetic powder and a thermosetting resin are kneaded into a paste phase, a sheet-like base material is produced by compression forming and thermosetting it in a thickness direction of the magnetic wedge, and then machined into dimensions and a shape required for the magnetic wedge.

Such a conventional magnetic wedge is usually machined to have an elongated rectangular parallelepiped (a rectangular shape) or a trapezoidal or convex cross section perpendicular to a lengthwise direction, is inserted into a groove or the like provided at a tip of a tooth in the lengthwise direction of the magnetic wedge, and is fitted and fixed.

[Citation List]

[Patent Literature]

[Patent Literature 1]
Japanese Patent Laid-Open No. H3-27745

[Summary of Invention]

[Technical Problem]

As described above, the conventional magnetic wedge has a machined finish, so that end surfaces thereof usually have an angular shape with sharp corners. When the magnetic wedge is inserted into the groove or the like at a tooth tip in this state, the corners will be scraped and the magnetic wedge will be damaged, and iron powder will be scattered, causing contamination. Furthermore, when the magnetic wedge is inserted, the corners of the magnetic wedge may become caught and bend, making insertion difficult, and in the worst case, causing the magnetic wedge to break.

Therefore, an objective of the present invention is to provide a magnetic wedge that allows the magnetic wedge to be inserted into a tooth tip more smoothly, and a method for manufacturing the magnetic wedge.

[Solution to Problem]

The present invention is a magnetic wedge to be installed in a slot opening of a stator of a dynamo-electric machine, wherein defining that a dimension of the magnetic wedge in a circumferential direction of the dynamo-electric machine is a width, a projection shape of the magnetic wedge projected onto a plane perpendicular to a width direction is a rectangle, a parallelogram, or a right angle trapezoid, and corners of the rectangle, the parallelogram, or the right angle trapezoid have a rounded shape.

Further, the magnetic wedge may include a plurality of soft magnetic particles and an electrically insulating substance between the soft magnetic particles.

Further, the soft magnetic particles may be Fe-based soft magnetic particles, the Fe-based soft magnetic particles may contain an element M that is more easily oxidized than Fe, the electrically insulating substance may be an oxide phase containing the element M, and the Fe-based soft magnetic particles may be bound by the oxide phase.

Further, the element M may be at least one selected from a group consisting of Al, Si, Cr, Zr, and Hf.

Further, in the magnetic wedge, the Fe-based soft magnetic particles may be Fe-Al-Cr alloy particles.

Further, the magnetic wedge may have a shape with a width that differs in the thickness direction of the magnetic wedge.

A dynamo-electric machine of the present invention has a stator for a dynamo-electric machine which has a plurality of teeth and a plurality of slots formed by the plurality of teeth and in which any one of the above-described magnetic wedges is fitted between tips of the teeth adjacent to each other, and a rotor disposed at a position by which an axis is shared.

A method for manufacturing a magnetic wedge of the present invention is a method for manufacturing a magnetic wedge that is to be installed in a slot opening of a stator of a dynamo-electric machine, including, defining that a dimension of the magnetic wedge in a circumferential direction of the dynamo-electric machine is a width, a pressing step of pressing raw material powder containing soft magnetic particles in a width direction to obtain a green compact, wherein, in the pressing step, a die having a rectangular, parallelogram, or right angle trapezoidal opening with rounded corners and a punch configured to be inserted into the opening of the die are used.

Further, in the method for manufacturing a magnetic wedge, a plurality of the soft magnetic particles and an electrically insulating substance between the soft magnetic particles may be included.

Further, in the method for manufacturing a magnetic wedge, the raw material powder may be mixed powder of a binder and powder of Fe-based soft magnetic particles containing an element M that is more easily oxidized than Fe, and after the pressing step, a heat treatment step of heat-treating the green compact to form a surface oxide phase of the Fe-based soft magnetic particles that binds the Fe-based soft magnetic particles together between the Fe-based soft magnetic particles may be provided.

Further, in the method for manufacturing a magnetic wedge, the element M may be at least one selected from a group consisting of Al, Si, Cr, Zr, and Hf.

Further, in the method for manufacturing a magnetic wedge, the Fe-based soft magnetic particles may be Fe-Al-Cr alloy particles.

Further, in the method for manufacturing a magnetic wedge, the punch may have a punch surface that is asymmetrical with respect to a center line in a thickness direction of the magnetic wedge.

[Advantageous Effects of Invention]

According to the present invention, it is possible to obtain a magnetic wedge that can be easily installed in a tooth portion.

[Brief Description of Drawings]

FIG. 1 is a perspective view and a cross-sectional view illustrating a shape of a magnetic wedge according to a first embodiment of the present invention.

FIG. 2 is a schematic diagram illustrating an installation form of the magnetic wedge of the first embodiment in a radial gap type dynamo-electric machine.

FIG. 3 is a schematic diagram illustrating a method for pressing the magnetic wedge according to the first embodiment of the present invention.

FIG. 4 is a perspective view and a cross-sectional view illustrating a shape of a magnetic wedge according to a second embodiment of the present invention.

FIG. 5 is a schematic cross-sectional view of a vicinity of a tooth tip, which illustrates an installation form of the magnetic wedge according to the second embodiment.

FIG. 6 is a schematic diagram illustrating a method for pressing the magnetic wedge according to the second embodiment of the present invention.

FIG. 7 is a cross-sectional view illustrating a shape of a lower punch used for pressing in an example of the present invention.

FIG. 8 is an external photograph of an example of the present invention.

FIG. 9 is a schematic diagram of a partial model.

FIG. 10 is an external photograph of an example and a comparative example.

FIG. 11 is a graph comparing the pushing forces of an example and a comparative example.

FIG. 12 is a DC magnetization curve (a B-H curve) of an example of the present invention.

FIG. 13 is a model diagram of a dynamo-electric machine used for an electromagnetic field analysis.

FIG. 14 is a cross-sectional view illustrating a shape of a magnetic wedge according to a third embodiment of the present invention.

FIG. 15 is a cross-sectional view illustrating another example of the third embodiment of the present invention.

FIG. 16 is a cross-sectional view showing an installation mode when a plurality of magnetic wedges of the third embodiment are inserted in a row.

FIG. 17 is a schematic diagram of a dynamo-electric machine illustrating an example of a fourth embodiment of the present invention.

[Description of Embodiments]

Embodiments of the present invention will be described in detail below with reference to the drawings, but the present invention is not limited to these embodiments. Further, descriptions of overlapping parts will be omitted.

An embodiment of the present invention is a magnetic wedge that is to be installed in a slot opening of a stator of a dynamo-electric machine, and defining that a dimension of the magnetic wedge in a circumferential direction of a dynamo-electric machine is a width, a projection shape of the magnetic wedge projected on a plane perpendicular to a width direction is a rectangle, a parallelogram, or a right angle trapezoid, and corners of the rectangle, parallelogram, or right angle trapezoid have a rounded shape. In other words, in the magnetic wedge according to the embodiment of the present invention, since the corners of the cross section perpendicular to the width direction of the magnetic wedge are rounded, the corners are not scraped and iron powder or the like is not scattered. Furthermore, when the magnetic wedge is inserted into a tip of a tooth, insertion can be performed more smoothly without the corners of the magnetic wedge getting caught and the magnetic wedge being bent, making it difficult to insert the wedge, or causing the magnetic wedge itself to break.

Here, the tip of the tooth (a tooth tip) refers to the tip side of the tooth, and is not particularly limited to an end. Further, the projection shape of the above-described magnetic wedge may be any shape as long as at least one pair of opposite sides are parallel. Further, the stator of the dynamo-electric machine has a plurality of teeth and a plurality of slots formed between the adjacent teeth, and a magnetic wedge having one of the projection shapes described above is fitted between the tips of the adjacent teeth, that is, opening portions of the slots (slot openings).

Next, specific embodiments will be described.

(First embodiment)

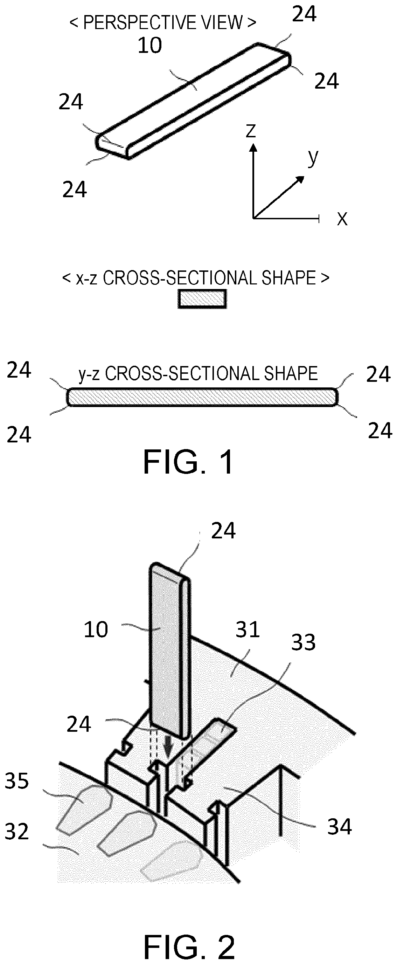

FIG. 1 illustrates a perspective view of a magnetic wedge 10 in this embodiment. The magnetic wedge 10 is a magnetic wedge for a dynamo-electric machine, and has a substantially rectangular parallelepiped shape with some corners being rounded. The rounded surface of the corner is hereinafter referred to as R 24. FIG. 1 also illustrates a cross-sectional shape of the magnetic wedge 10. A shape of a cross section (an x-z cross section) perpendicular to a lengthwise direction (a y direction) of the magnetic wedge is rectangular. A shape of a cross section (a y-z cross section) perpendicular to a width direction (an x direction) is a rounded rectangle with corners having the R 24. In other words, the projection shape of the magnetic wedge projected on a plane (a y-z cross section) perpendicular to the width direction (the x direction) is a rectangle, and corners of the rectangle are rounded. That is, the projection shape of the magnetic wedge can be recognized as a rectangle as a whole, even when it has the R. A long side direction of the rectangle corresponds to a length of the magnetic wedge, and a short side direction of the rectangle corresponds to a thickness of the magnetic wedge.

When the magnetic wedge 10 is installed in a radial gap type dynamo-electric machine, the lengthwise direction of the magnetic wedge (the y direction in FIG. 1, the long side direction of the above-described rectangle) corresponds to an axial direction of the dynamo-electric machine, the thickness direction of the magnetic wedge (the z direction in FIG. 1, the short side direction of the above-described rectangle) corresponds to a radial direction of the dynamo-electric machine, and the width direction of the magnetic wedge (the x direction in FIG. 1) corresponds to a circumferential direction of the dynamo-electric machine. On the other hand, when the magnetic wedge 10 is installed in an axial gap type dynamo-electric machine, the lengthwise direction of the magnetic wedge (the y direction in FIG. 1, the long side direction of the rectangle described above) corresponds to a radial direction of the dynamo-electric machine, a thickness direction of the magnetic wedge (the z direction in FIG. 1, the short side direction of the above-described rectangle) corresponds to an axial direction of the rotating shaft, and the width direction of the magnetic wedge (the x direction in FIG. 1) corresponds to a circumferential direction of the dynamo-electric machine. For example, approximate dimensions of the magnetic wedge 10 are approximately 10 mm to 300 mm in the lengthwise direction (the y direction) of the magnetic wedge, and are approximately 2 mm to 20 mm in the width direction (the x direction) of the magnetic wedge, and are approximately 1 to 5 mm in the thickness direction (the z direction) of the magnetic wedge.

When the shape of the magnetic wedge becomes elongated, the risk of breakage during installation increases, and thus it is also possible to prepare a magnetic wedge that is shorter than a thickness of a stator in advance and to insert it in a row. In this case, the length of the magnetic wedge is approximately 100 mm or less.

FIG. 2 is a schematic diagram illustrating a configuration in which the magnetic wedge 10 is installed in a radial gap type dynamo-electric machine. The magnetic wedge 10 is inserted into a groove provided at a tip of a tooth 34 in the axial direction of the dynamo-electric machine, but at this time, since the magnetic wedge 10 is inserted from a portion at which the R 24 is formed, there is less risk that the magnetic wedge 10 will be caught on an inner surface of the groove of the tooth 34 during insertion, and the magnetic wedge 10 can be smoothly inserted, fitted and fixed. FIG. 2 illustrates a case of a radial gap type dynamo-electric machine, but in a case of an axial gap type dynamo-electric machine, it is the same as the radial gap type dynamo-electric machine except that an insertion direction of the magnetic wedge 10 is in the radial direction of the dynamo-electric machine, and since it is inserted from the portion at which the R 24 is formed, it can be smoothly inserted, fitted and fixed.

The magnetic wedge 10 can be a green compact made of soft magnetic particles (hereinafter, also referred to as soft magnetic powder), such as iron powder or Fe-based soft magnetic alloy powder, or both. By making the magnetic wedge 10 from such a material, it becomes possible to manufacture it by powder pressing, and as a result, the R can be easily formed without using machining as described below.

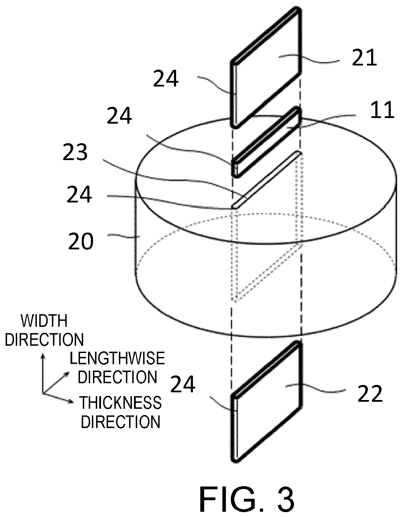

Here, FIG. 3 illustrates a schematic diagram of tooling (a die 20), an upper punch 21, and a lower punch 22 used when the magnetic wedge 10 shown in FIG. 1 is manufactured by powder pressing. A cavity having a rounded rectangular opening 23 that is equal to a y-z cross-sectional shape of the magnetic wedge 10 is provided in the die 20. Here, a shape of the cavity provided in the die 20 is preferably tapered so that it is wide at the top and narrows toward the bottom. By providing a taper, it becomes possible to easily take out a green compact from the die 20 after pressing, and it is possible to solve the problem that the magnetic wedge 10 and the die 20 rub against each other, causing scratches on a surface of the magnetic wedge, and that the die wears out and a life thereof is shortened, when the magnetic wedge 10 that is the green compact is taken out of the die 20.

The upper punch 21 and the lower punch 22 each have a rounded rectangular cross-sectional shape perpendicular to a pressing direction that is equal to the cross-sectional shape of the magnetic wedge 10. In other words, the upper punch 21 and the lower punch 22 are approximately rectangular with corners having the R and are approximately the same shape as the opening 23 of the die 20. However, in order to enable the upper punch 21 and the lower punch 22 to be inserted into the opening 23 of the die 20, dimensions thereof are several micrometers smaller than a dimension of the opening.

A method for manufacturing the magnetic wedge according to the embodiment of the present invention is a method for manufacturing a magnetic wedge that is to be installed in a slot opening of a stator of a dynamo-electric machine, and includes a pressing step of obtaining a green compact by pressing raw material powder containing soft magnetic particles in the width direction, defining that the dimension of the magnetic wedge in the circumferential direction of the dynamo-electric machine is the width, wherein, in the pressing step, a die having a rectangular, parallelogram, or right trapezoidal opening with rounded corners and a punch that can be inserted into the opening of the die are used.

Here, in the pressing step, a green compact of the magnetic wedge 10 can be obtained using, for example, a die and a punch. The method for forming the magnetic wedge 10 using the die 20, the upper punch 21, and the lower punch 22 is as follows. First, only the lower punch 22 is inserted into the die 20, and the cavity is filled with raw material powder containing soft magnetic powder. Then, the upper punch 21 is inserted into the opening and applied with a predetermined pressure. At this time, a direction in which the pressure is applied (a pressing direction) is the width direction of the magnetic wedge 10. The pressurized raw material powder is consolidated and becomes a green compact 11. The obtained green compact 11 has a shape having the R 24. The magnetic wedge 10 can be obtained by subjecting the green compact 11 to a heat treatment or the like to solidify it.

In addition to the above-described width direction, it is also theoretically possible to apply pressure in the thickness direction or lengthwise direction during pressing. However, when pressure is applied in the thickness direction, a pressing surface becomes an x-y plane in FIG. 1, the pressure is applied on the largest surface of the magnetic wedge 10, and thus a large load is required. For this reason, a large press machine is required, leading to a problem such as increased equipment costs. On the other hand, when pressure is applied in the lengthwise direction, although the pressing surface is minimized, it becomes difficult to form the R shape shown in FIG. 1 only by the pressing step. Furthermore, it is necessary to prepare a fairly thick die and elongated upper and lower punches, which increases the tooling costs including durability of the tooling. In this regard, according to the manufacturing method of this embodiment that applies pressure in the width direction, it is possible to apply pressure in a y-z plane which has a relatively small area, and the load can be significantly reduced compared to the case of pressing in the thickness direction. Furthermore, the R shape of the end portion can be easily formed by appropriately shaping the opening of the die as described above.

A pressing pressure can be adjusted as appropriate according to the material and properties of the raw material powder, but when it is too low, a density of the green compact will be too low and a strength of the green compact will be insufficient, and in addition to causing problems in handling in subsequent steps, the density may become low even after the heat treatment, causing problems such as insufficient strength and inability to obtain desired magnetic properties. Therefore, the pressing pressure is preferably 0.1 GPa or more, preferably 0.2 GPa or more, and even more preferably 0.3 GPa or more. On the other hand, when the pressing pressure is too high, the load on the tooling will increase, making wear and tear more likely to occur, and the life of the tooling will be shortened. From such a viewpoint, the pressing pressure is preferably 3 GPa or less, more preferably 2 GPa or less, and even more preferably 1 GPa or less.

Further, in order to extend the life of the tooling, it is preferable that at least portions of the die 20, the upper punch 21, and the lower punch 22 that come into contact with the green compact 11 be formed of cemented carbide.

As described above, according to the manufacturing method of this embodiment, the R shape can be formed at the end portion of the magnetic wedge 10 without machining, and the magnetic wedge 10 that can be easily fitted and installed in a dynamo-electric machine can be manufactured at low cost. Furthermore, since the opening of the die has a rounded rectangular shape, the R shape alleviates stress concentration at the corners caused by the pressing pressure, which is also effective in improving the life of the tooling. In order to enjoy the above-described effects more reliably, a radius of the R is preferably 0.1 mm or more, more preferably 0.2 mm or more, and even more preferably 0.3 mm or more.

On the other hand, from the viewpoint of ensuring an effective length of the magnetic wedge 10, the radius of the R is preferably 50% or less of the thickness of the magnetic wedge 10, more preferably 40% or less, and even more preferably 30% or less.

On the other hand, by making the R smaller, a gap between the magnetic wedge and the tooth tip in this portion is reduced, fixation of the magnetic wedge is strengthened, and disturbances in distribution of magnetic flux that occur around the gap are curbed, and as a result, the magnetic wedge also contributes to improving motor efficiency. From this point of view as well, the radius of the R is preferably 50% or less of the thickness of the magnetic wedge 10, more preferably 40% or less, and even more preferably 30% or less.

Further, the magnetic wedge 10 can be made of a composite material made of soft magnetic particles and an electrically insulating substance. The composite material is a material in which an electrically insulating substance is present between multiple soft magnetic particles to bind the soft magnetic particles to each other and to electrically isolate the particles, and can curb eddy current loss that occurs in the magnetic wedge 10 by increasing an electrical resistance of the magnetic wedge 10.

An average particle diameter (a median diameter d50 in the cumulative particle size distribution) of the soft magnetic particles is preferably 200 $\mu$m or less, more preferably 100 $\mu$m or less, and even more preferably 50 $\mu$m or less, because if it is too large, the electrical resistance will decrease and the eddy current loss will increase. On the other hand, in order to maintain high magnetic permeability and to enhance the effects of the magnetic wedge, the average particle diameter of the ferromagnetic particles is preferably 2 $\mu$m or more, more preferably 5 $\mu$m or more, and even more preferably 10 $\mu$m or more.

Both organic and inorganic substances can be used as the electrically insulating substance, and for example, an epoxy resin, a phenol resin, polyimide, polyphenylene sulfide, polyamide, polyamideimide, a silicone resin, colloidal silica, low melting point glass, or the like can be used. When they are used, the ferromagnetic powder and these electrically insulating substances are mixed, and then it can be produced by methods such as transfer molding, injection molding, hot pressing, or the like, in addition to the powder pressing described above.

In the method for manufacturing the magnetic wedge that is the embodiment of the present invention, the raw material powder is a mixed powder of a binder and Fe-based soft magnetic particles containing an element M that is more easily oxidized than Fe, and a heat treatment step of subjecting the green compact to heat treatment to form a surface oxide phase of the Fe-based soft magnetic particles that binds the Fe-based soft magnetic particles together between the Fe-based soft magnetic particles is provided after the pressing step.

Further, the magnetic wedge 10 is a consolidated body of the plurality of Fe-based soft magnetic particles 1 containing the element M that is more easily oxidized than Fe. Here, the "element M that is more easily oxidized than Fe" is an element of which standard Gibbs energy of formation of an oxide is lower than that of $Fe_2O_3$. As the element M, at least one selected from a group consisting of Al, Si, Cr, Zr, and Hf can be used. One form of the magnetic wedge 10 is an Fe-based alloy in which the soft magnetic particles contain the element M that is more easily oxidized than Fe, and may also be a form in which an oxide phase of the element M is generated between the soft magnetic particles to bind the particles to each other. As a method for manufacturing the magnetic wedge 10 of this form, the oxide phase of the element M can be grown at a grain boundary by heat-treating the soft magnetic particles in an atmosphere involving oxygen after pressing them using the above method, and according to this form, a ratio of the electrically insulating material at the grain boundary can be minimized, resulting in high density, high strength, and high magnetic permeability, which is more preferable.

Further, not only one type of element M but also two or more types of elements M due to a combination of Al and Cr, Si and Cr may be selected. For example, two types of Al and Cr may be selected, and the Fe-based soft magnetic particles 1 may be formed of Fe-Al-Cr based alloy particles. In this way, the magnetic wedge 10 can have high bending strength and high electrical resistance. The Fe-Al-Cr based alloy is an alloy in which the elements having the next highest content after Fe are Cr and Al (in no particular order), and other elements may be contained in a smaller amount than Fe, Cr, and Al. A composition of the Fe-Al-Cr alloy is not particularly limited, but for example, the content of Al is preferably 2.0% by mass or more, and more preferably 5.0% by mass or more. From the viewpoint of obtaining the high saturation magnetic flux density, the content of Al is preferably 10.0% by mass or less, and more preferably 6.0% by mass or less. A content of Cr is preferably 1.0% by mass or more, and more preferably 2.5% by mass or more. From the viewpoint of obtaining the high saturation magnetic flux density, the content of Cr is preferably 9.0% by mass or less, and more preferably 4.5% by mass or less.

When two or more elements are selected as the element M, a total content thereof is preferably 1.0% by mass or more and 20% by mass or less, as in the case in which one element is selected.

Further, the Fe-based soft magnetic particles may be surface-treated particles using a chemical method, heat treatment, or the like. Furthermore, the Fe-based soft magnetic particles can also be configured of a plurality of types of Fe-based soft magnetic particles having different compositions.

(Second embodiment)

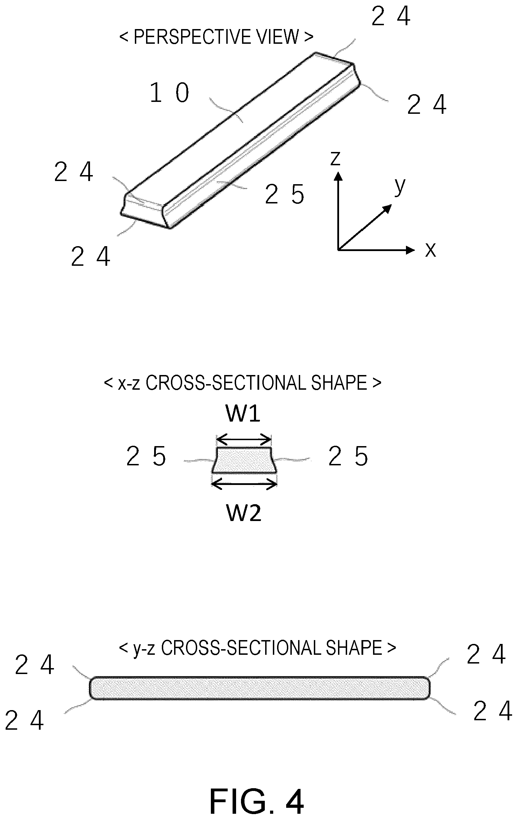

FIG. 4 illustrates a perspective view of a magnetic wedge 10 according to a second embodiment of the present invention. The magnetic wedge 10 is a substantially rectangular parallelepiped, similar to the first embodiment described above, and has the R 24 at an end portion thereof. FIG. 4 also illustrates a shape of a cross section (an x-z cross section) perpendicular to the lengthwise direction (the y direction) of the magnetic wedge 10. As shown in the drawing, in the second embodiment, the cross-sectional shape is approximately trapezoidal. Further, a shape of a cross section (a y-z cross section) perpendicular to the width direction (the x direction) is a rounded rectangle with corners having the R 24, as in the first embodiment.

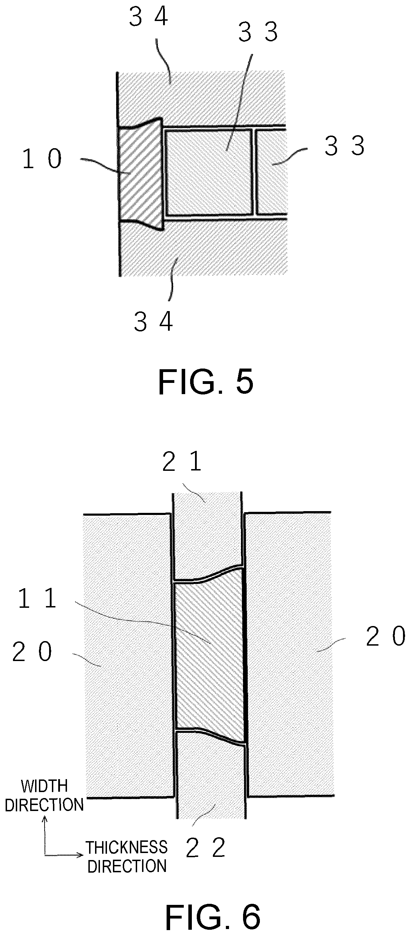

When the magnetic wedge 10 of the second embodiment is installed in a dynamo-electric machine, preferably, it is installed in a direction in which an upper side of the trapezoid in the x-y cross section faces a rotor, as shown in FIG. 5. At this time, preferably, a shape of a groove at a tooth tip into which the magnetic wedge 10 is fitted also matches the cross-sectional shape of the magnetic wedge 10. By adopting such an installation form, the magnetic wedge 10 can be brought closer to the rotor, and it becomes possible to increase a loss reduction effect of a dynamo-electric machine by the magnetic wedge.

As schematically shown in FIG. 6, the shape of the second embodiment can be produced by making the shapes of the punch surfaces of the upper punch 21 and the lower punch 22 the same as a shape of a side surface of the magnetic wedge 10, and forming the green compact 11 by pressing in the width direction of the magnetic wedge 10, and solidifying it by heat treatment or the like. By employing such a manufacturing method, the shape of the magnetic wedge 10 of the second embodiment can be easily obtained without performing extra machining.

The shape of the magnetic wedge 10 of the second embodiment in the x-z cross section is not limited to the approximately trapezoidal shape shown in FIG. 4, as long as it is asymmetrical with respect to a line passing through the center of the magnetic wedge in the thickness direction, and may be any shape in which the width of the magnetic wedge differs in the thickness direction, and various shapes such as a convex shape can be adopted. Additionally, in this case, in accordance with the shape of the magnetic wedge 10 in the x-z cross section, the punch surfaces of the upper punch 21 and the lower punch 22 are also configured to have an asymmetric shape with respect to the center line in the thickness direction of the magnetic wedge, that is, in the short side direction of the cavity (the rectangle) of the opening 23. However, as shown in FIGs. 4 to 6, preferably, the shape of the side surface 25 of the magnetic wedge 10 (and the shape of the upper punch 21 and the lower punch 22) is a shape in which straight lines and curved lines are smoothly connected, and more preferably, a portion at which a straight portion and an inclined portion are connected to each other has the R shape. With such a shape, when the raw material powder in the cavity of the opening 23 is pushed by the upper punch 21 and the lower punch 22 during pressing, the raw material powder can move from a high pressure region to a low pressure region along the shape of the punch surface, and thus density uniformity inside the green compact 11 can be improved. Furthermore, by forming the punch surface in this manner, stress applied to the punch surface during pressing can be prevented from being concentrated on an inflection portion, which is preferable in terms of improving the durability and life of the punch. Furthermore, although the magnetic wedge 10 is repeatedly pressed against the teeth by an electromagnetic excitation force when a motor is driven, and thus stress is generated, it is possible to prevent the stress from being concentrated on the inflection portion by forming the side surface 25 of the magnetic wedge 10 in such a shape. Therefore, it is effective in improving the durability and life of the magnetic wedge.

As a pressing method, a pressing method (a single-stage pressing) in which compression is simply performed using the upper punch 21 and the lower punch 22 as shown in FIG. 6 can be used, but a pressing method (a multi-stage pressing) in which one or both of the upper punch 21 and the lower punch 22 are divided and compressed while each is independently controlled can also be used. Among such methods, the single-stage pressing method is preferable because it can avoid complication and enlargement of a press machine and tooling used, and the time required for pressing can be made relatively short. However, when the single-stage pressing method is employed, care must be taken to ensure that a difference in density within the green compact does not become too large. That is, defining that a length of a top side of the x-z cross-sectional shape of the magnetic wedge 10 shown in FIG. 4 is W1, and a length of a bottom side is W2, when W1/W2 is too small, while the density of the green compact near the top side is easily increased, it is difficult to increase the density of the green compact near the bottom side, and thus the difference in density within the green compact becomes large, which tends to cause a decrease in strength and insufficient magnetic properties. From this viewpoint, in the case of the single-stage pressing, W1/W2 is preferably 60% or more, more preferably 70% or more, and even more preferably 80% or more. On the other hand, when a value of W1/W2 becomes 100%, there is no protrusion in the width direction, and the magnetic wedge cannot be fixed in the form shown in FIG. 5. From this viewpoint, the value of W1/W2 is preferably 95% or less, more preferably 90% or less, and even more preferably 85% or less.

On the other hand, due to a structure of the stator, the value of W1/W2 may have to be set to 60% or less. In such a case, it is possible to produce a shape in which W1/W2 is 60% or less, or 50% or less, or even 40% or less using the multi-stage pressing method.

(Third embodiment)

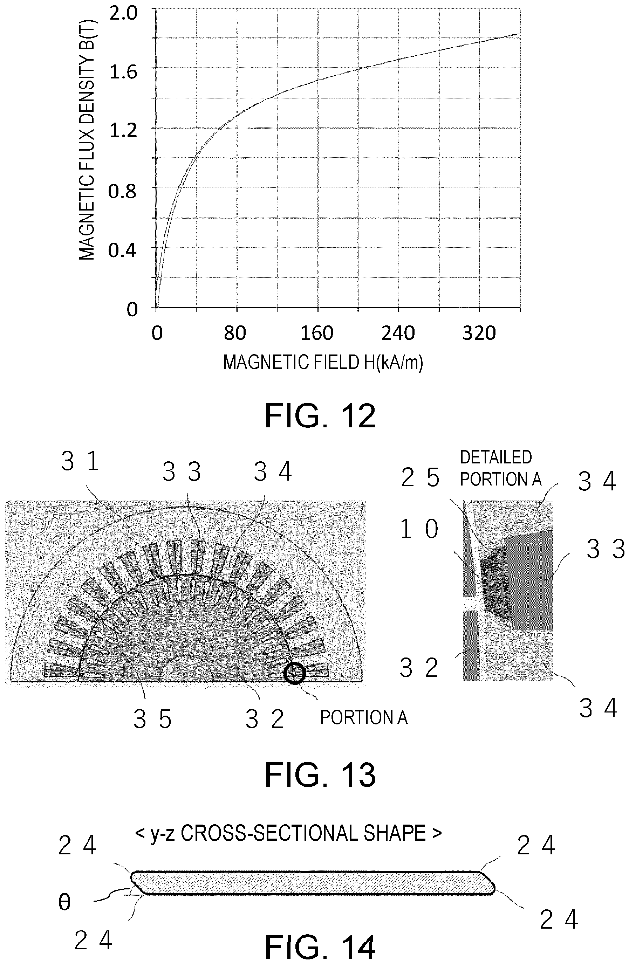

FIG. 14 illustrates a cross-sectional view of a magnetic wedge 10 according to a third embodiment of the present invention. This drawing illustrates a cross-sectional shape of the magnetic wedge 10 in a y-z plane perpendicular to an x-axis when x, y, and z axes are taken as in FIG. 1. That is, it has a cross-sectional shape perpendicular to the width direction (the x direction) of the magnetic wedge 10. The y-z cross section of the magnetic wedge 10 is approximately a parallelogram, and corners thereof have the R portion 24. By making the y-z cross-sectional shape of the magnetic wedge 10 into such a shape, an end portion of the magnetic wedge 10 has a shape that protrudes at a more acute angle. When the magnetic wedge is installed in the tip of the tooth 34, the magnetic wedge 10 is inserted from the end portion that protrudes at a more acute angle, and thus it can be inserted more smoothly.

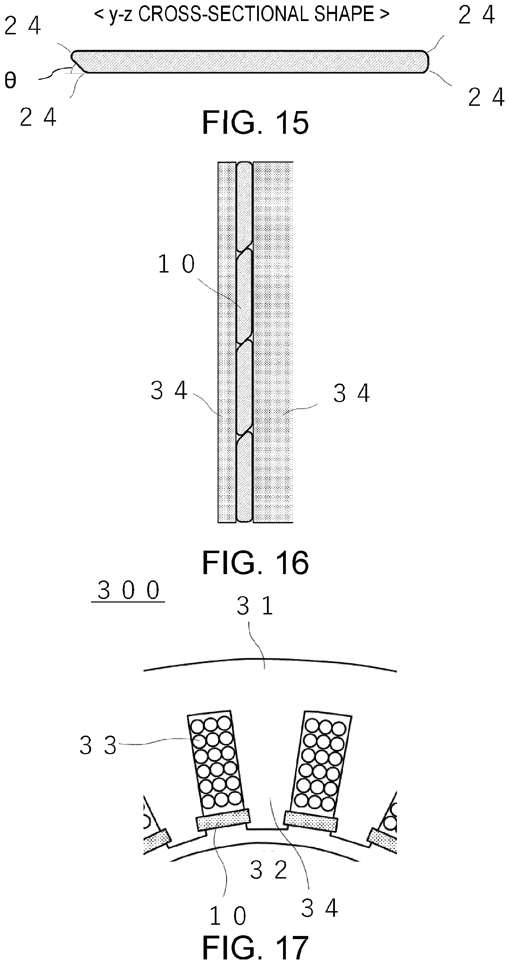

Further, a modified example of this embodiment is shown in FIG. 15. This drawing illustrates a cross-sectional shape of the magnetic wedge 10 in the y-z plane perpendicular to the x-axis when the x, y, and z axes are taken as in FIG. 1. That is, it has a cross-sectional shape perpendicular to the width direction (the x direction) of the magnetic wedge 10. The y-z cross section of the magnetic wedge 10 has an approximate shape of a right angle trapezoid, and corners thereof have the R 24. When the magnetic wedge is installed in the tip of the tooth 34, it is inserted from the protrusion, and thus it can be inserted smoothly in the same way as shown in FIG. 14.

Furthermore, when a plurality of magnetic wedges 10 are inserted in a row into one tooth tip, the magnetic wedges 10 of the third embodiment are installed in the manner shown in FIG. 16. When the magnetic wedges of the third embodiment are inserted as shown in FIG. 16, it is possible to reduce and disperse gaps at the boundaries between the magnetic wedges, which is preferable in that problems such as disturbance of magnetic flux are alleviated. Further, in overlapping portions of the magnetic wedges 10, an effect in which they are pressed against the inner wall surfaces of the grooves provided at the tips of the teeth is generated, and thus the magnetic wedges 10 are more firmly fixed. Further, it is preferable to use a magnetic wedge located at the end surface of the teeth 34 and having a cross-sectional shape of a right angle trapezoid. By adopting such a configuration, it is possible to eliminate the magnetic wedge protruding from the end surface of the stator, and conversely, it is possible to eliminate wasted space in which the magnetic wedge is not present. Although FIG. 16 illustrates a case in which four magnetic wedges 10 are arranged in a row, this is just an example, and the number of magnetic wedges 10 can be changed as appropriate according to the thickness of the tooth 34 and the length of the magnetic wedge 10.

As described above, in the configuration in which a plurality of magnetic wedges 10 having a parallelogram or right angle trapezoidal cross-sectional shape are installed in a row, an effect in which the magnetic wedges 10 are pressed against each other in the overlapping portion, regardless of the presence or absence of the R 24 is produced, and thus this in itself can be regarded as an invention that makes the fixation of the magnetic wedge 10 stronger. That is, a dynamo-electric machine includes a stator for a dynamo-electric machine having a plurality of teeth and a plurality of slots formed by the plurality of teeth and in which a plurality of magnetic wedges each having a parallelogram or right angle trapezoidal cross-sectional shape in the lengthwise direction of the magnetic wedges are installed in a row between the tips of the adjacent teeth, and a rotor disposed at a position by which an axis is shared with the stator for the dynamo-electric machine.

When an angle (θ shown in FIG. 14) of the end surface of the magnetic wedge 10 is too large (that is, θ is the closer to 90°), it becomes difficult to obtain the above-described effect. On the other hand, when θ is too small, the protrusions at the end portions become thin and problems such as chipping tend to occur. From this viewpoint, θ is preferably in a range of 15° or more and 75° or less, more preferably in a range of 30° or more and 60° or less, and even more preferably in a range of 40° or more and 50° or less.

Preferably, the magnetic wedge 10 of the third embodiment is a green compact made of soft magnetic particles, and is produced by powder pressing. In this case, the cross-sectional shape of the magnetic wedge 10 shown in FIG. 14 is such that the opening 23 of the tooling (the die 20) in FIG. 3 is the same as the shape in FIG. 14, the upper punch 21 and the lower punch 22 are also made have shapes that match the shape, and thus the magnetic wedge 10 of the third embodiment can be easily manufactured. In addition, at this time, by making the surface shapes of the upper punch 21 and the lower punch 22 into a shape including a taper as shown in FIG. 6, it is possible to produce the magnetic wedge 10 of the third embodiment characterized in that both side surfaces of the magnetic wedge 10 are inclined, that is, the cross section (the x-z cross section) perpendicular to the lengthwise direction (y-axis direction) of the magnetic wedge is approximately trapezoidal. Furthermore, the shape of the x-z cross section is not limited to a substantially trapezoidal shape, but it is also possible to have various shapes such as a convex shape in which the width of the magnetic wedge varies in the thickness direction of the magnetic wedge.

(Fourth embodiment)

Next, a dynamo-electric machine 300 according to a fourth embodiment of the present invention will be described together with a stator for a dynamo-electric machine that is one of components thereof.

FIG. 17 is a schematic diagram of the dynamo-electric machine 300 and illustrates a cross-sectional structure perpendicular to a rotation axis of the dynamo-electric machine 300. The dynamo-electric machine 300 is a radial gap type dynamo-electric machine, and includes a stator for a dynamo-electric machine (a stator 31) and a rotor (a rotor 32) disposed inside the stator 31, which are disposed coaxially. The stator 31 has a plurality of teeth 34 and a plurality of slots formed by the plurality of teeth 34, and the plurality of teeth 34 around which a coil 33 is wound are disposed at equal intervals in the circumferential direction.

In the dynamo-electric machine 300 of the embodiment, the magnetic wedge 10 of the first embodiment is fitted to the rotor 32 side of the slot, that is, to tips of the teeth 34 on the rotor 32 side so as to connect the tips of adjacent teeth 34.

Here, the relative permeability and saturation magnetic flux density of the teeth 34 are usually designed to be higher than those in the magnetic wedge 10. As a result, a magnetic flux from the rotor 32 reaching the magnetic wedge 10 flows into the teeth 34 via the magnetic wedge 10, the magnetic flux reaching the coil can be curbed, and the eddy current loss generated in the coil can be reduced. Further, when the dynamo-electric machine is driven, most of the magnetic flux in the teeth 34 generated by a coil current flows into the rotor 32 with an interval, but some of the magnetic flux is attracted by the magnetic wedge and spreads in the circumferential direction. Thus, a magnetic flux distribution in a gap between the stator 31 and the rotor 32 becomes gentle, and for example, in a dynamo-electric machine in which a permanent magnet is disposed in the rotor 32, cogging can be curbed, and the eddy current loss generated in the rotor 32 can be further reduced. Also, for example, in an induction type dynamo-electric machine in which a cage-shaped conductor is disposed at a rotor 32, secondary copper loss can be reduced. The loss can be reduced and the dynamo-electric machine 300 with high efficiency and high performance can be obtained by disposing the magnetic wedge 10 according to the present invention in the dynamo-electric machine as described above.

Example

Hereinafter, an example of the second embodiment using the Fe-Al-Cr based alloy as the Fe-based soft magnetic particles will be described. However, materials, blending amounts, and the like described in this example are not intended to limit the scope of the present invention to those alone unless otherwise specified.

(Preparation method of raw material)

An alloy powder of Fe-5% Al-4% Cr (% by mass) was prepared by a high-pressure water atomizing method. Specific preparation conditions are as follows. A tapping temperature was 1650 °C (a melting point 1500 °C), a diameter of a molten metal nozzle was 3 mm, a tapping discharge rate was 10 kg/min, a water pressure was 90 MPa, and a water volume was 130 L/min. Melting and tapping of raw materials were performed in an Ar atmosphere. An average particle size (a median diameter) of the prepared powder was 12 $\mu$m, a specific surface area of the powder was 0.4 m$^2$/g, true density of the powder was 7.3 g/cm$^3$, and a content of oxygen of the powder was 0.3%.

Polyvinyl alcohol (PVA) and ion-exchanged water were added to this raw material powder to prepare slurry, and the slurry was spray-dried with a spray dryer to obtain granulated powder. Defining that the raw material powder is 100 parts by weight, an amount of PVA added is 0.75 parts by weight. Zinc stearate was added to the granulated powder at a ratio of 0.4 parts by weight and mixed.

(Method for producing green compact)

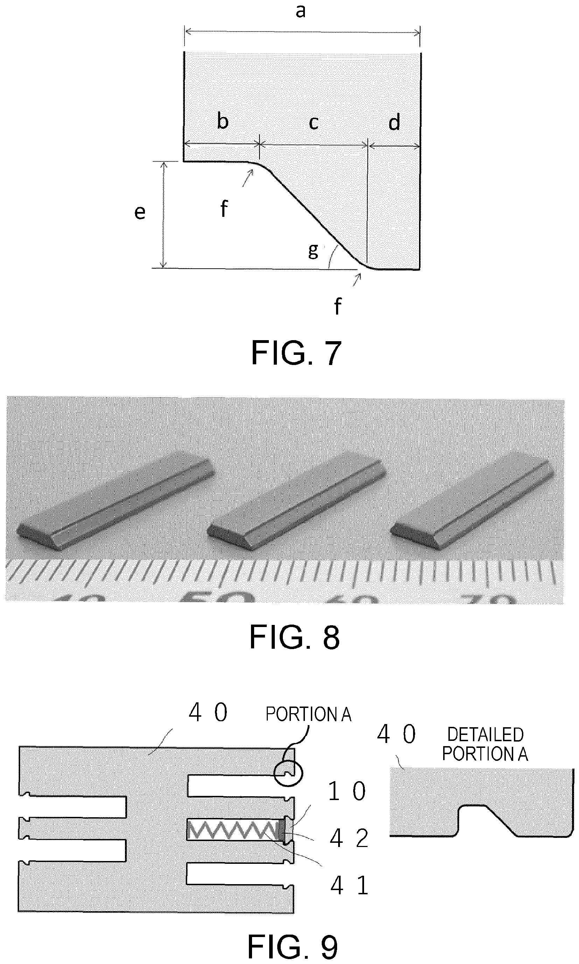

The mixed powder was filled in tooling and pressed at room temperature. Here, tooling having a shape that is the same as that shown in FIG. 3 was used. A material of the tooling is cemented carbide. The opening of the die was a rounded rectangle of 18 mm $\times$ 1.5 mm, and the R of the corner was 0.3 mm. A punch of which a punch surface had the same shape as the side surface of the magnetic wedge was used. A cross-sectional shape of the punch used is shown in FIG. 7. This drawing is a cross-sectional view similar to that shown in FIG. 6, and illustrates a shape of an upper punch tip. In the drawing, a is 1.5 mm, b is 0.5 mm, c is 0.65 mm, d is 0.35 mm, e is 0.65 mm, f is R0.3, and g is 45°.

As can be seen from FIG. 7, the shape of the upper punch tip has a straight line portion on both end sides of the upper punch in the thickness direction and an inclined portion that connects them, and a portion at which the straight line portion and the inclined portion are connected has the R shape. The lower punch used had a shape of the upper punch upside down. The material of the punch is cemented carbide for both the upper punch and the lower punch.

The above die and punch were installed in a mechanical press machine with a maximum load of 20 tons, and an amount of descent of the upper punch was adjusted so that a length of the green compact in a stroke direction (a width W2 of the longer side of the magnetic wedge in FIG. 4) was 5 mm. Then, a position of the tooling (a depth of the cavity) was adjusted so that the density of the green compact was 6.0 g/cm$^3$, and the raw material powder was filled. After the raw material powder was filled, the tooling was raised by 1 mm to prevent the raw material powder from being extruded from the die opening when the upper punch came into contact with the raw material powder. Then, the upper punch was lowered to a predetermined position to perform pressing. At this time, the die was also lowered at about half a lowering speed of the upper punch to prevent density variation within the green compact from becoming too large. A load at a bottom dead center during pressing was 2 tons. The pressing pressure obtained by dividing this value by an opening area of the die was 0.7 GPa.

(Heat treatment)

The green compact prepared as described above was heat-treated in the air at 750 °C for 1 hour. A temperature increase rate at this time was 250 °C/h.

(Exterior, dimensions, and density of example)

Fifty examples were created using the manufacturing method described above. FIG. 8 illustrates external photographs of three of the examples. The dimensions of the 50 manufactured magnetic wedges were as follows: width (W2 in FIG. 4) was 5.006 ± 0.050 mm, thickness was 1.529 ± 0.005 mm, and length was 17.95 ± 0.01 mm. Here, a numerical value of each of the dimensions is an average value of the 50 examples, and the dimension variation illustrates a value of ±3σ. Among the dimensions, the width and thickness were measured using a micrometer, and the length was measured using a caliper.

In addition, a mass of each of the magnetic wedges was measured and divided by a volume calculated from each of the dimensions to determine the density. As a result, the density was 6,150±120Kg/m$^3$. A space factor (relative density) which is a value obtained by dividing the density of the magnetic wedge by a true density of the powder was 84%. The reason why the density of the magnetic wedge is higher than that of the green compact is caused by an oxidation increase due to heat treatment.

W1 and W2 shown in FIG. 4 were measured using a length measurement function of an optical microscope (VHX-6000 manufactured by Keyence Corporation; observation magnification 30 times) for 5 randomly selected magnetic wedges from the 50 manufactured magnetic wedges, and W1/W2 was calculated by taking a ratio thereof. As a result, W1/W2 of each of the five examples was in a range of 74.4% to 75.2%.

(Electrical resistance)

An electrical resistivity of the magnetic wedge was $5 \times 10^4$ Ω·m. 4 mm square Ag electrodes are formed on two facing planes of the magnetic wedge by sputtering, and the electrical resistivity ρ (Ω·m) was calculated by the following Equation using a resistance value R (Q) at the time of applying 50 V measured by a digital ultra-high resistance tester R8340 manufactured by Advantest Co.

$$\rho(\Omega \cdot \mu) = P \times A / t$$

Here, A is an area of the electrode (m$^2$), and t is a thickness (m) of the magnetic wedge.

(Bending strength)

A three-point bending strength at room temperature was measured using a universal testing machine (Model 5969 manufactured by Instron). Measurement conditions were a load cell capacity of 500 N, a fulcrum diameter of 4 mm, an indenter diameter of 4 mm, a distance between fulcrums of 8 mm, and a test speed of 0.12 mm/min. From a load P (N) at break, the cross-sectional shape of the magnetic wedge was approximated by a trapezoid, and a three-point bending strength σ was calculated using the following Equation.

$$\sigma = 3LP(2W1+W2)/((W1^2 W2^2 + 4W1W2)h^2)$$

Here, L is a distance between the fulcrums, W1 and W2 are widths of the magnetic wedges (refer to FIG. 4), and h is a thickness of the magnetic wedge. In addition, at the time of measurement, the magnetic wedge was set so that the wide side (W2) of the magnetic wedge was facing down.

The three-point bending strength of the magnetic wedge (3 samples) measured as described above was 140 to 160 MPa, which was confirmed to be higher than a strength (about 100 MPa) normally required for a magnetic wedge.

(Partial model)

In order to evaluate an effect of providing the R at the end portion of the magnetic wedge 10, a partial model 40 imitating the tooth 34 of a motor was created, and an installation test of the magnetic wedge 10 in this partial model 40 was conducted. A schematic diagram of the partial model 40 is shown in FIG. 9. The partial model was created by using a block of 50 mm × 30 mm non-oriented electrical steel plates (Nippon Steel 35H300) glued and stacked to a thickness of 50 mm as a material, and performing wire electrical discharge machining on the block to have the shape and dimensions shown in FIG. 9. As shown in FIG. 9, five recesses imitating slots were made, but they all had the same shape and dimensions. A spring 41 is installed in each of the recesses imitating slots, so that the magnetic wedge 10 can be fixed by being pressed against a groove (a portion A in FIG. 9) at the tooth tip via a baking plate 42 and a spacer (not shown) if necessary. As the magnetic wedge 10, the magnetic wedge described above was used.

A pressing force of the magnetic wedge 10 by the spring 41 can be adjusted as appropriate by using springs with different spring constants or by inserting an appropriate spacer. In this test, nine compression coil springs (D5509 manufactured by KS Sangyo; outer diameter of 3.7 mm, free length of 16 mm) with a spring constant of 1.588 N/mm were arranged and installed, and a spacer (not shown) having a thickness of 3.8 mm was further inserted between the spring and the baking plate. Therefore, an amount of compression of the spring when the magnetic wedge 10 was inserted was 3.8 mm, and the magnetic wedge 10 was pressed with a total force of 53 N from the nine springs.

(Pushing force during installation)

A pushing force when the magnetic wedge 10 is inserted into the partial model 40 described above was measured as follows. First, two magnetic wedges each having a length of 18 mm are inserted in advance, and a third magnetic wedge is inserted 1 mm from an upper end of the partial model. In this state, using a universal testing machine (Model 6959 manufactured by Instron), the third magnetic wedge was inserted at a pushing speed of 0.1 mm/s, and a force (a pushing force) generated at that time was measured with a load cell.

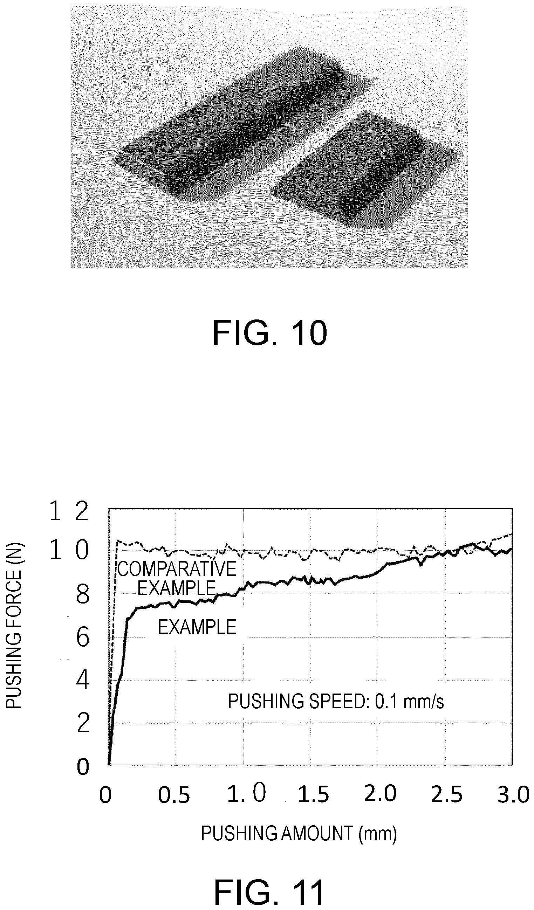

As the third magnetic wedge, a magnetic wedge with an end portion having the R (left side in FIG. 10), and a magnetic wedge (right side in FIG. 10) in which the magnetic wedge is broken and the R portion is removed are used as comparative examples. When the comparative example is inserted, it was inserted into the partial model 40 from the broken surface side. Measurement results of the pushing force are shown in FIG. 11. As shown in the drawing, the magnetic wedge had a lower pushing force than in the comparative example, and it was confirmed that it was easily installed in a motor by forming the R at the end portion of the magnetic wedge.

(DC magnetization curve)

A DC magnetization curve (a B-H curve) of the magnetic wedge was measured using a self-recording magnetic flux meter (TRF-5AH manufactured by Toei Kogyo Co., Ltd.). Five pieces were prepared by cutting off both ends of the above-described magnetic wedge by 4 mm in the lengthwise direction with a slicer to have a length of 10 mm, and they were glued together in the thickness direction to prepare a measurement sample. The sample was held between magnetic poles of an electromagnet and the B-H curve in the lengthwise direction was measured at a maximum applied magnetic field of 360 kA/m.

Measurement results at room temperature are shown in FIG. 12. A value of magnetic flux density at an applied magnetic field of 160 kA/m was 1.52T. A relative magnetic permeability obtained by dividing the value of the magnetic flux density (1.52 T) by a value of an applied magnetic field (160 kA/m) and further by a magnetic permeability of vacuum ($4\pi \times 10^{-7}$ H/m) was 7.6.

(Characteristic simulation of dynamo-electric machine)

Motor efficiency when a magnetic wedge having the above-described magnetic properties is installed in an induction type dynamo-electric machine was calculated using electromagnetic field simulation by a finite element method. The main specifications of the induction type dynamo-electric machine used for the electromagnetic field simulation are as follows.

Output: 3.7kW
Number of poles: 4P
Voltage: 200V
Frequency: 50Hz
Synchronous speed: 1500rpm
Outer diameter of stator: 200mm
Inner diameter of stator: 120mm
Number of stator slots: 36
Number of rotor slots: 44

FIG. 13 illustrates a model diagram of the dynamo-electric machine (a motor) used in this simulation. This drawing illustrates a cross section perpendicular to a motor axis. Further, the shape and installation position of the magnetic wedge 10 are shown on the right side of FIG. 13. In the width of the magnetic wedge (the length in the circumferential direction of the dynamo-electric machine), the dimension corresponding to W1 in FIG. 4 was 3.0 mm, and W2 was 4.3 mm. The thickness (the length in the radial direction of the dynamo-electric machine) was 1.5 mm, and a taper angle of the side surface 25 of the magnetic wedge 10 was 45° with respect to the radial direction of the dynamo-electric machine. An electromagnetic field analysis was performed by setting the B-H curve shown in FIG. 12 at the portion of the magnetic wedge 10. A side shape of the magnetic wedge shown in FIGs. 4 and 7 is such that a straight line portion and a tapered portion are smoothly connected through slight R, but since it is troublesome to accurately model and incorporate the detailed R portion into the simulation, the R of the connection portion was ignored in this simulation.

As a result of the electromagnetic field analysis, as shown in Table 1, it was found that the installation of the magnetic wedge improved motor efficiency in both cases of sine wave input and rectangular wave input. In this way, it is possible to improve the efficiency of the motor by using the magnetic wedge having the magnetic properties of this embodiment.

[Table 1]

| Input waveform | Motor efficiency | |
|---|---|---|
| | No magnetic wedge | With magnetic wedge |
| Sine wave | 87.2% | 87.6% |
| Rectangular wave | 85.5% | 86.3% |

As described above, according to the present invention, the R shape can be formed at the end portion of the magnetic wedge 10 without machining, the magnetic wedge 10 that can be easily fitted and installed into a dynamo-electric machine can be manufactured at low cost, and the efficiency of the dynamo-electric machine can be improved.

[Reference Signs List]

10 Magnetic wedge
11 Green compact (magnetic wedge)
20 Die
21 Upper punch
22 Lower punch
23 Opening
24 R
25 Side surface of magnetic wedge

31 Stator
32 Rotor
33 Coil
34 Teeth
35 Secondary conductor
40 Partial model
41 Spring
42 Baking plate
300 Dynamo-electric machine

**Claims**

1. A magnetic wedge to be installed in a slot opening of a stator of a dynamo-electric machine,

   wherein defining that a dimension of the magnetic wedge in a circumferential direction of the dynamo-electric machine is a width,
   a projection shape of the magnetic wedge projected onto a plane perpendicular to a width direction is a rectangle, a parallelogram, or a right angle trapezoid, and corners of the rectangle, the parallelogram, or the right angle trapezoid have a rounded shape.

2. The magnetic wedge according to claim 1, including a plurality of soft magnetic particles and an electrically insulating substance between the soft magnetic particles.

3. The magnetic wedge according to claim 2, wherein the soft magnetic particles are Fe-based soft magnetic particles,

   the Fe-based soft magnetic particles contain an element M that is more easily oxidized than Fe,
   the electrically insulating substance is an oxide phase containing the element M, and
   the Fe-based soft magnetic particles are bound by the oxide phase.

4. The magnetic wedge according to claim 3, wherein the element M is at least one selected from a group consisting of Al, Si, Cr, Zr, and Hf.

5. The magnetic wedge according to claim 4, wherein the Fe-based soft magnetic particles are Fe-Al-Cr alloy particles.

6. The magnetic wedge according to any one of claims 1 to 5, wherein the magnetic wedge has a shape with a width that differs in the thickness direction of the magnetic wedge.

7. A dynamo-electric machine having:

   a stator for a dynamo-electric machine which has a plurality of teeth and a plurality of slots formed by the plurality of teeth and in which the magnetic wedge according to any one of claims 1 to 5 is fitted between tips of the teeth adjacent to each other; and
   a rotor disposed at a position by which an axis is shared with the stator for the dynamo-electric machine.

8. A dynamo-electric machine having:

   a stator for a dynamo-electric machine which has a plurality of teeth and a plurality of slots formed by the plurality of teeth and in which the magnetic wedge according to claim 6 is fitted between tips of the teeth adjacent to each other; and
   a rotor disposed at a position by which an axis is shared with the stator for the dynamo-electric machine.

9. A method for manufacturing a magnetic wedge that is to be installed in a slot opening of a stator of a dynamo-electric machine, the method comprising:

   defining that a dimension of the magnetic wedge in a circumferential direction of the dynamo-electric machine is a width,
   a pressing step of pressing raw material powder containing soft magnetic particles in a width direction to obtain a green compact,
wherein, in the pressing step, a die having a rectangular, parallelogram, or right angle trapezoidal opening with rounded corners and a punch configured to be inserted into the opening of the die are used.

10. The method for manufacturing a magnetic wedge according to claim 9, including a plurality of the soft magnetic particles and an electrically insulating substance between the soft magnetic particles.

11. The method for manufacturing a magnetic wedge according to claim 10, wherein the raw material powder is mixed powder of a binder and powder of Fe-based soft magnetic particles containing an element M that is more easily oxidized than Fe, and
after the pressing step, a heat treatment step of heat-treating the green compact to form a surface oxide phase of the Fe-based soft magnetic particles that binds the Fe-based soft magnetic particles together between the Fe-based soft magnetic particles is provided.

12. The method for manufacturing a magnetic wedge according to claim 11, wherein the element M is at least one selected from a group consisting of Al, Si, Cr, Zr, and Hf.

13. The method for manufacturing a magnetic wedge according to claim 11, wherein the Fe-based soft magnetic particles are Fe-Al-Cr alloy particles.

14. The method for manufacturing a magnetic wedge according to any one of claims 9 to 13, wherein the punch has a punch surface that is asymmetrical with respect to a center line in a thickness direction of the magnetic wedge.

< PERSPECTIVE VIEW >

< x-z CROSS-SECTIONAL SHAPE >

y-z CROSS-SECTIONAL SHAPE

FIG. 1

FIG. 2

24
24
23
24
20

21
11
24
22

WIDTH
DIRECTION
LENGTHWISE
DIRECTION
THICKNESS
DIRECTION

FIG. 3

< PERSPECTIVE VIEW >

2 4

1 0

2 4

2 4

2 5

z

y

x

2 4

< x-z CROSS-SECTIONAL SHAPE >

W1

2 5

2 5

W2

< y-z CROSS-SECTIONAL SHAPE >

2 4

2 4

2 4

2 4

FIG. 4

3 4

3 3

1 0

3 3

3 4

# FIG. 5

2 1

1 1

2 0

2 0

WIDTH
DIRECTION

THICKNESS 2 2
DIRECTION

# FIG. 6

a

b

c

d

e

f

g

f

## FIG. 7

## FIG. 8

4 0    PORTION A

4 0    DETAILED
        PORTION A

1 0

4 2

4 1

## FIG. 9

FIG. 10

FIG. 11

FIG. 12

FIG. 13

FIG. 14

< y-z CROSS-SECTIONAL SHAPE >

2 4

θ

2 4

2 4

2 4

**FIG. 15**

1 0

3 4

3 4

**FIG. 16**

3 0 0

3 1

3 3

3 2

1 0

3 4

**FIG. 17**

## INTERNATIONAL SEARCH REPORT

International application No.

**PCT/JP2022/037524**

### A. CLASSIFICATION OF SUBJECT MATTER

*H02K 1/16*(2006.01)i; *B22F 1/00*(2022.01)i; *B22F 1/14*(2022.01)i; *B22F 3/00*(2021.01)i; *B22F 3/035*(2006.01)i; *C22C 38/00*(2006.01)i; *H01F 1/147*(2006.01)i; *H01F 1/24*(2006.01)i; *H01F 1/26*(2006.01)i; *H01F 41/02*(2006.01)i; *H02K 1/02*(2006.01)i; *H02K 3/493*(2006.01)i; *H02K 15/02*(2006.01)i

FI: H02K1/16 Z; C22C38/00 303S; B22F1/00 Y; B22F3/00 B; B22F1/14 100; B22F3/035 D; H02K15/02 D; H01F1/26; H02K1/02 A; H01F1/24; H01F1/147; H01F41/02 D; H02K3/493

According to International Patent Classification (IPC) or to both national classification and IPC

### B. FIELDS SEARCHED

Minimum documentation searched (classification system followed by classification symbols)

H02K1/16; B22F1/00; B22F1/14; B22F3/00; B22F3/035; C22C38/00; H01F1/147; H01F1/24; H01F1/26; H01F41/02; H02K1/02; H02K3/493; H02K15/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2021-143424 A (HITACHI METALS, LTD.) 24 September 2021 (2021-09-24) paragraphs [0001]-[0113], fig. 1-16 | 1-14 |
| Y | Microfilm of the specification and drawings annexed to the request of Japanese Utility Model Application No. 1435/1982 (Laid-open No. 105754/1983) (MITSUBISHI ELECTRIC CORP.) 19 July 1983 (1983-07-19), p. 1, line 9 to p. 5, line 13, fig. 1-4 | 1-14 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/037524**

| Patent document cited in search report | | | Publication date (day/month/year) | Patent family member(s) | | | Publication date (day/month/year) |
|---|---|---|---|---|---|---|---|
| JP | 2021-143424 | A | 24 September 2021 | EP 4020767 A1 paragraphs [0001]-[0141], fig. 1-16 KR 10-2022-0034870 A CN 114270456 A | | | |
| JP | 58-105754 | U1 | 19 July 1983 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H327745 A